Europäisches Patentamt

European Patent Office

Office européen des brevets

(11) Publication number: **0 329 283**
**A1**

## (12) EUROPEAN PATENT APPLICATION

(21) Application number: **89300572.8**

(22) Date of filing: **20.01.89**

(51) Int. Cl.⁴: **C08L 25/06 , C08L 51/04 , B65D 85/74 , //(C08L25/06, 23:02,51:04,53:02),(C08L51/04, 25:06,23:02,53:02)**

(30) Priority: **21.01.88 FR 8800665**

(43) Date of publication of application:
**23.08.89 Bulletin 89/34**

(84) Designated Contracting States:
**BE CH DE FR GB IT LI NL**

(71) Applicant: **BP Chemicals Limited**
**Belgrave House 76 Buckingham Palace Road London, SW1W 0SU(GB)**

(72) Inventor: **Lamblin, Olivier**
**BP Chemicals Produits Chimiques BP Usine de Wingles F-62410 Wingles(FR)**

(74) Representative: **Barlow, Michael Thomas et al BP INTERNATIONAL LIMITED Patents & Agreements Division Chertsey Road Sunbury-on-Thames Middlesex TW16 7LN(GB)**

(54) **Polystyrene compositions.**

(57) A polystyrene composition having improved resistance to the chemically induced stress cracking caused by fats, eg margarine, butter, etc. is provided. The composition consists essentially of a high impact polystyrene, optionally containing a polystyrene homopolymer, a polyolefin and a styrene-butadiene radial block copolymer. Preferred polyolefins are the linear low density polyolefins.

EP 0 329 283 A1

## POLYSTYRENE COMPOSITIONS

The present invention relates to polystyrene compositions having improved impact resistance relative to those known previously.

It is known that polystyrene deteriorates drastically, through stress-cracking, when in contact with fatty substances and halogenated aliphatic hydrocarbons. Such a phenomenon is particularly troublesome when polystyrene is used either as a packaging material for fatty foods such as butter, margarine etc or as a material used for refrigerator liners (because during manufacture, the polymer is in contact with the fluorocarbons used in the manufacture of polyurethane foam).

One approach to reducing chemically induced stress cracking of the type mentioned above is to use a copolymer of styrene and other monomers e.g. ABS. Another approach described in US 3894117, is to use a composition comprising a blend of a polyolefin, polystyrene and one or more block copolymers containing sequences of both the polyolefin and the polystyrene. The function of such copolymer(s) is to prevent the tendency of the polyolefin and the polystyrene to form separate domains in the finished article.

Other patents have disclosed alternative copolymers which exhibit the same effect. For example, US 4031166 discloses the use of a range of block copolymers of the type X-Y and X-(Y-X)$_n$ where n is preferably 1, X is vinylaromatic and X is a diene. Particularly preferred and exemplified is a block copolymer of formula X-Y-X wherein X = polystyrene and Y = polybutadiene. GB 1363466 discloses the use of hydrogenated styrene-butadiene two-block copolymers.

EP 60525 discloses a thermoplastic having a high impact resistance and consisting of a mixture of high density polyethylene, high impact polystyrene and a styrene/diene block copolymer having three or more blocks.

Finally, EP 4685 discloses a composition resistant to attack by fatty substances and chemicals comprising a major proportion of polystyrene, a minor amount of either polyethylene or polystyrene and a polystyrene/hydrogenated polybutadiene block copolymer of formula X-Y-X where X is polystyrene and Y is hydrogenated polybutadiene. The polystyrene blocks each have a molecular weight in the range 5-10,000 and the hydrogenated polybutadiene block has a molecular weight in the range 25-50,000.

It is an object of the present invention to produce a polystyrene composition having resistance to the chemically induced stress cracking described above.

It has now been found that polystyrene compositions containing (a) a polyolefin selected from low density polyethylene, low density polypropylene or low density copolymers of ethylene and propylene and (b) styrene-butadiene-styrene radial block copolymers exhibit particularly good properties and resistance.

According to the present invention there is provided a polystyrene composition consisting essentially of

1) between 70 and 90% by weight of a polystyrene component, the polystyrene component itself consisting of between 15 and 100% by weight of a high impact polystyrene and between 85 and 0% by weight of a polystyrene homopolymer.

2) between 5 and 25% by weight of a polyolefin selected from low density polyethylene, low density polypropylene and low density copolymers of propylene and ethylene.

3) between 2 and 15% by weight of a styrene-butadiene radial block copolymer.

It should be understood that references to percentages by weight in the above composition and any compositions defined subsequently relate to percentages based on the total weight of the three components. The amounts of other standard additives e.g. stabilisers, pigments, filler and the like should therefore be ignored for purposes of calculation.

The polystyrene component used is either a high impact polystyrene or a mixture of a high impact polystyrene and a polystyrene homopolymer. Persons skilled in the art will be familiar with the term high impact polystyrene (HIPS). It includes graft copolymers of styrene and an impact-improving elastomers such as butadiene. The elastomer content of such materials is in the range 5-20% based on the styrene.

The remainder of the polystyrene component is a polystyrene homopolymer and may be any general purpose crystal polystyrene homopolymer.

The second component of the composition is between 5 and 15% by weight of a polyolefin selected from a low density polyethylene, low density polypropylene and low density copolymers of ethylene and propylene.

A very preferred polyolefin for this application is linear low density polyethylene.

By the term linear low-density polyethylene is meant an essentially linear polyethylene in which the number of branches having chain lengths of more than 12 carbon atoms is negligible. Such materials are prepared by the copolymerisation of ethylene with up to 20% by weight, based on the ethylene polymer, of

2

one or more alpha-olefins having 3 to 14 carbon atoms. The linear low-density polyethylene preferably contains between 3 and 10% by weight of the alpha-olefin, preferred alpha olefins being selected from 1-butene, 1-pentene, 1-hexene, 4 methyl pent-1-ene and 1-octene.

It is preferable that the second component comprises between 8 and 20% by weight of the three components.

The styrene-butadiene block copolymers used in the process of the present invention are radial block copolymers, sometimes known in the art as 'Star' block copolymers. Such materials have a tetrachain configuration comprising four polybutadiene chains radiating from a central point, each chain being capped by a block of polystyrene. The composition of the radial block copolymer is such that it comprises between 20 and 60% by weight, preferably 30 to 50% by weight styrene. The radial block copolymers are such that their molecular weight are preferably in the range 50,000 - 300,000.

Particularly preferred radial block copolymers are those sold under the registered trade marks Finaprene. A preferred examples is Finaprene 414 which has a molecular weight of 130,000 and a styrene content of 40% by weight. The radial block copolymer preferably comprises from 5 to 10% by weight of the composition.

For applications where the composition is likely to be exposed to fluorocarbons, e.g. refrigerators etc, it is preferable that the polystyrene component consists solely of the high impact polystyrene. Where the contact with fatty foods is of a greater concer; it is preferable that the polystyrene homopolymer is present and that there is between 10 and 15% by weight of linear low-density polyethylene is present.

The polystyrene compositions of the present invention can be prepared by compounding the appropriate weights of the three components which are in powder form. The compositions are preferably prepared by extrusion compounding.

The compositions of the present invention can be used to manufacture a range of articles including tubs, cartons, lids, bottles and the like using techniques such as thermoforming, extrusion and injection moulding.

Thus, in a final aspect of this invention, there is provided a container for fatty foods, such as butter, margarine, oil and the like, characterised in that it is fabricated out of the polystyrene composition defined above.

The invention is now illustrated by the following Examples.

## Preparation of the Compositions

Composition 1 was prepared by extrusion compounding 15 parts by weight - of a linear low density polyethylene (BP LLO22OAA), 10 parts by weight of Finaprene 414 (ex Fina), 20 parts by weight BP 5400 (a high impact polystyrene ex BP Chemicals) and 55 parts by weight HH 101 (a polystyrene homopolymer ex BP Chemicals).

Composition 2 was prepared by extrusion compounding 10 parts by weight of BP LLO22OAA, 10 parts by weight of Finaprene 414, 40 parts by weight BP 5400 and 55 parts by weight HH 101.

Composition 3 was prepared by extrusion compounding 10 parts by weight of BP LLO22OAA, 10 parts by weight of the Finaprene 414 and 80 parts by weight of BP 5400.

## Properties of the Compositions

The physical properties of the three compositions are shown in the Table 1 along with a high impact polystyrene (Polystyrol 2710 from BASF AG specially designed for applications requiring good ESC resistance) and an ABS polymer (Lustran QE 530 from Monsanto Europe SA for the purposes of comparison). Polystyrol and Lustran are Trade Marks.

## Environmental Stress Cracking Resistance (ESCR) to Fats - Test Procedure

1. Extrude sample into 0.2mm sheets and condition according to DIN 50014 for at least 24 hours.
2. Cut sample for testing from sheet (12cm x 0.1cm).
3. Measure thickness (I 0.1mm).
4. Attach sample to a tensile jig.
5. Coat sample with a layer of sunflower margarine.

6. Weight sample to produce a stress of 5l 0.2MPa.

7. Measure time required until sample breaks (in hours) up to maximum 200 hours.

Environmental Stress Cracking Resistance (ESCR) to Freon R-11 Gas -Test Procedure

In this test a sample of rectangular cross section is submitted in flexion under three point loading to an atmosphere of Freon-R11. After exposure its tensile properties are measured and compared to a blank.

The test is typically carried out in an 18 litre vessel which can be evacuated. The vessel is provided with a funnel through which liquid freon can be introduced, a manometer and a thermometer. The vessel also contains a three point loading flexural jig. Finally the vessel is lagged with a 12cm layer of expanded polystyrene.

Tensile samples are cut from a sheet of the material to be tested. The dimensions are as defined in DIN norm 53455/3.

The tensile samples are then moulded using an Ankerwerke moulding machine set at the following conditions:

| Temperature: | mould | 45° C |
| | Nozzle | 220° C |
| | barrel 1 | 220° C |
| | barrel 2 | 205° C |
| Cycle times: | injection | 20 secs |
| | cooling | 40 secs |
| Pressure: | injection | 42 Kg/cm² |
| | back | 14 Kg/cm² |

After moulding the samples are conditioned according to DIN 50014 for 24 hours. Following conditioning the moulded samples are exposed to 0.5atm of Freon in the 18l vessel at 20° C for 24 hours. During this time the samples are flexed under a stress of 4.9±0.5 N/mm². After 24 hours the samples are reconditioned and subjected to tensile tests within 72 hours. The tensile tests are carried out according to DIN 53455norm (speed v = 50mm/min) and the tensile elongation at break (%) recorded.

Composition 4 was prepared by extrusion compounding 10 parts by weight of a low density polyethylene LD1202AA (ex BP Chemicals), 10 parts of Finaprene 414 and 80 parts of BP5400.

Composition 5 was prepared in the same way as composition 4 except that the low density polyethylene used was LD1309AA (ex BP Chemicals).

Composition 6 was prepared by extrusion compounding 10 parts by weight of a linear low density polyethylene LL0209AA (ex BP Chemicals), 5 parts of Finaprene 414 and 85 parts of BP5400.

Composition 7 was prepared in the same way as composition 6 except that 10 parts of Finaprene 414 and 80 parts of BP5400 were used.

Composition 8 was prepared by extrusion compounding 15 parts by weight LL0209AA, 10 parts Finaprene 414 and 75 parts of BP5400.

In each case an antioxidant system comprising Irganox 1076/565 : 0.1%/0.1% was employed. The term Irganox is a trade mark.

The physical properties of the compositions were measured and are given in Table 2. The table also records the tensile elongation of each composition before and after treatment with sunflower margarine. The treatment procedure was as follows:

(a) 0.4 - 0.5 mm sheets were extruded on a 1 inch BETOL extruder.

(b) strips (10 x 1 cm) were cut from the sheets in the machine direction.

(c) strips were bent around a tube having an adequate diameter in order to have a 1% constant strain on the external surface of the strips.

(d) strips coated with margarine (80% fats, sunflower margarine).

(e) tensile elongation measured after 24 hours.

4

Table 1

| PROPERTIES | UNITS | COMPOSITION | | | COMPARISON | |
|---|---|---|---|---|---|---|
| | | 1 | 2 | 3 | MONTSANTO ABS QE530 | BASF HIPS 2710 |
| MFI | g/10m | 3.9 | 3.1 | 3.4 | 0.1 | 4.8 |
| 5Kg VICAT | °C | 86 | 87 | 81 | 94 | 89 |
| FDI (210° injection) at +23° | J | 58 | 71 | 92 | 98 | 35 |
| FDI (250° injection) at +23° | J | 50 | 73 | 82 | 88 | 50 |
| FDI (250° injection) at -30° | J | 40 | 45 | 55 | 35 | 50 |
| FDI (extrusion 210°/60°) | J | 51 | 62 | 76 | | 53 |
| IZOD (1/2 X 1/2) | J/m | 130 | 170 | 235 | 280 | 56 |
| TENSILE STRENGTH | MPa | 33 | 29 | 22 | 37.5 | 13 |
| TENSILE MODULUS | 6Pa | 2.15 | 2.0 | 1.6 | 2.3 | 1.3 |
| TENSILE ELONGATION | % | 70 | 75 | 96 | 50 | 60 |
| TENSILE ELONGATION after freon test (24h,strain = 1%) | % | 74 | 68 | 108 | 44 | 45 |
| ESCR to fats (5MPa, 0.2mm extruded strips) | h | >200 | 150 | 5 | >200 | 0.1 |
| TENSILE ELONGATION after 6 thermal cycling -40°/+60° | % | | | 80 | | |

Table 2

| Composition | Izod (Iso 180/2A) J/M | FDI Injected 2.54 mm plaque 210°C J | FDI Extruded 2 mm sheet 200/80°C J | VICAT ISO 306 5 kg C | Tensile Strength/Yield ISO 527/MPA | Elongation/Fall ISO 527/1% | Tensile Modulus ISO 527/1 | Tensile Elongation before/after 1% constant strain treatment with margarine %/% |
|---|---|---|---|---|---|---|---|---|
| 4 | 214 | 73 | 79 | 81.2 | 23.3 | 58 | 1.47 | 63/20 |
| 5 | 211 | 100 | 77 | 81.8 | 23.3 | 84 | 1.53 | 94/66 |
| 6 | 229 | 113 | - | - | 25.0 | 126 | 1.59 | - |
| 7 | 269 | 122 | 95 | 82.9 | 23.8 | 117 | 1.46 | 123/82 |
| 8 | 301 | 113 | 107 | 78.9 | 22.8 | 103 | 1.33 | 129/117 |

EP 0 329 283 A1

**Claims**

1. A polystyrene composition consisting essentially of

(1) between 70 and 90% by weight of a polystyrene component, the polystyrene component itself consisting of between 15 and 100% by weight of a high impact polystyrene and between 85 and 0% by weight of a polystyrene homopolymer.

(2) between 5 and 25% by weight of a polyolefin selected from low density polyethylene, low density polypropylene and low density copolymers of ethylene and propylene.

(3) between 2 and 15% by weight of a styrene-butadiene radial block copolymer.

2. A polystyrene composition as claimed in claim 1 chartacterised in that the polyolefin is a linear low density polyethylene.

3. A polystryene composition as claimed in claim 2 characterised in that the linear low density polyethylene contains between 3 and 10% of an alpha olefin selected from 1-butene, 1-pentene, 1-hexene, 4-methylpent-1-ene and 1-octene.

4. A polystyrene composition as claimed in either claim 1 or claim 2 characterised in that the styrene-butadiene radial block copolymer comprises between 30 and 50% by weight styrene.

5. A polystyrene composition as claimed in claim 4 characterised in that the molecular weight of the styrene-butadiene radial block copolymer is in the range 50,000-300,000.

6. A polystyrene composition as claimed in claim 4 characterised in that the styrene-butadiene radial block copolymer is one which is sold under the trade name Finaprene 414.

7. A polystyrene composition as claimed in claim 1 characterised in that the polyolefin comprises between 8 and 20% by weight of the composition and the styrene-butadiene radial block copolymer comprises between 5 and 10% by weight of the composition.

8. A process for preparing a polystyrene composition of the type defined in claim 1 which comprises compounding appropriate weights of the components defined in claim 1.

9. A container for fatty foods such as butter, margarine, oil and the like characterised in that it is fabricated out of the polystyrene composition defined in claim 1.

10. A polystyrene composition consisting essentially of:

(a) between 70 and 90% by weight of a polystyrene component, the polystyrene component itself consisting of between 15 and 100% by weight of a high impact polystyrene and between 85 and 0% by weight of polystyrene homopolymer.

(b) between 5 and 25% by weight of either a low density polyethylene or a linear low density polyethylene.

(c) between 5 and 15% by weight of a styrene-butadiene block copolymer sold under the trade names Finaprene.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | EP-A-0 004 685 (SHELL INTERNATIONALE RESEARCH MIJ.)<br>* Claim 1; page 16, example II-E *<br>--- | 1 | C 08 L 25/06<br>C 08 L 51/04<br>B 65 D 85/74 //<br>(C 08 L 25/06<br>C 08 L 23:02<br>C 08 L 51:04 |
| A,D | EP-A-0 060 525 (MONTEFINA)<br>* Claim 1 *<br>--- | 1 | C 08 L 53:02 )<br>(C 08 L 51/04<br>C 08 L 25:06 |
| A,D | US-A-4 031 166 (K. BRONSTERT et al.)<br>* Claim 1; example 1 *<br>----- | 1 | C 08 L 23:02<br>C 08 L 53:02 ) |

TECHNICAL FIELDS SEARCHED (Int. Cl.4)

C 08 L

The present search report has been drawn up for all claims

| Place of search | Date of completion of the search | Examiner |
|---|---|---|
| THE HAGUE | 05-06-1989 | HOFFMANN K.W. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P0401)